# FASCICULE DE BREVET EUROPEEN

(11) **EP 0 898 550 B1**
(45) Date de publication et mention de la délivrance du brevet: **04.06.2003**
(21) Numéro de dépôt: 98913820.1
(22) Date de dépôt: 04.03.1998
(51) Int. Cl.: B64C 27/32, B64C 27/35

(54) **MOYEU POUR TETE DE ROTOR D'AERONEF A VOILURE TOURNANTE ET TETE DE ROTOR COMPORTANT UN TEL MOYEU**
ROTORKOPFNABE EINES DREHFLÜGELFLUGZEUGES UND ROTORKOPF MIT EINER SOLCHEN NABE
HUB FOR ROTOR HEAD OF ROTARY WING AIRCRAFT AND ROTOR HEAD WITH SUCH HUB

(30) Priorité: 06.03.1997 FR 9702667
(43) Date de publication de la demande: 03.03.1999
(73) Titulaire: Mouille, René, 13090 Aix en Provence (FR)
(72) Inventeur: Mouille, René, 13090 Aix en Provence (FR)
(74) Mandataire: Bonnetat, Christian
(86) Numéro de dépôt international: FR9800418
(87) Numéro de publication internationale: WO98039206

(56) Documents cités:
- DE-A- 3 510 073
- FR-A- 2 671 049
- FR-A- 2 689 483
- BRAUN D ET AL: "FEL - A NEW MAIN ROTOR SYSTEM" VERTICA, vol. 14, no. 1, 1 janvier 1990, pages 47-60, XP000099607

## Description

La présente invention concerne un moyeu pour tête de rotor d'aéronef à voilure tournante, ainsi qu'une tête de rotor comportant un tel moyeu.

Par le brevet français FR-A-2 671 049, on connaît déjà un moyeu pour la tête de rotor d'un aéronef à voilure tournante, comprenant au moins deux pales dont chacune d'elles est reliée radialement audit moyeu par un pied de pale pourvu d'une boucle rigide constituant l'attache de la pale sur ledit moyeu, ledit moyeu portant des butées sphériques lamifiées, dont chacune d'elles est associée à une pale et comprend, entre une armature externe rigidement liée audit moyeu et une armature interne liée au pied de ladite pale, un empilement alterné de coupelles rigides et de lames d'un matériau élastique en forme de portions de sphère ayant un centre commun, chaque butée sphérique lamifiée constituant pour la pale associée un organe de retenue sur ledit moyeu et une articulation unique en battement, en traînée et en pas et ladite boucle rigide d'une pale entourant la butée sphérique lamifiée associée et étant solidarisée de l'armature interne de cette dernière butée.

Dans ce document antérieur, ledit moyeu présente la forme d'une cage monobloc pourvue d'une paroi latérale mince, de forme sensiblement cylindrique, comportant au moins autant d'ouvertures qu'il y a de pales, chaque ouverture ayant des dimensions suffisantes pour au moins le passage et les débattements de la butée sphérique lamifiée de la pale correspondante.

Ainsi, avec un tel moyeu connu, la réalisation de la tête de rotor nécessite de solidariser chaque butée sphérique de boucle rigide de la pale associée, puis d'introduire lesdites butées, ainsi solidarisées de leurs pales, à l'intérieur de ladite cage à travers lesdites ouvertures et, enfin, fixer lesdites butées audit moyeu. On conçoit aisément qu'il en résulte des opérations difficiles de manipulation, d'ajustement et d'assemblage.

Pour faciliter ces opérations, on a déjà pensé à prévoir des des manchons de liaison intermédiaires entre lesdites butées et lesdites pales, chacun desdits manchons portant, d'un côté, ladite boucle rigide et, de l'autre côté, des moyens de fixation pour le pied d'une pale. Ainsi, les pales peuvent n'être montées sur la tête de rotor, qu'après montage des manchons de liaison dans le moyeu, ce qui facilite le montage complet de la tête de rotor, mais impose les pièces supplémentaires que sont lesdits manchons de liaison.

La présente invention a pour objet de remédier à ces inconvénients. Elle concerne un moyeu du type rappelé ci-dessus facilitant le montage de la tête de rotor, mais ne nécessitant pas de manchons de liaison entre le moyeu et les pales.

A cette fin, selon l'invention, le moyeu pour tête de rotor d'aéronef à voilure tournante, du type rappelé ci-dessus, est remarquable en ce qu'il comprend un plateau supérieur et un plateau inférieur formant deux pièces distinctes assemblées l'une à l'autre avec interposition des armatures externes desdites butées sphériques, de sorte que lesdits plateaux sont espacés l'un de l'autre et délimitent entre eux un espace dans lequel sont logées lesdites butées sphériques, lesdites armatures externes étant disposées à la périphérie desdits plateaux et étant traversées par des moyens de fixation solidarisant entre eux lesdits plateaux et lesdites butées sphériques.

Ainsi, grâce à la présente invention, on obtient un moyeu creux, sans paroi latérale à ouvertures, dont l'espace intérieur est accessible par le dessus, lorsque ledit plateau supérieur est démonté, pour faciliter le montage et/ou le démontage des pales et des butées sphériques qui y sont associées. De ce fait, il est possible de supprimer les manchons de liaison et d'utiliser des pales d'une seule pièce avec la boucle de pied de pale.

On remarquera de plus que, grâce à la présente invention, on obtient un moyeu particulièrement compact et particulièrement léger dans lequel les butées sphériques peuvent être rapprochées au maximum du centre du moyeu, puisqu'aucun arbre d'entraînement ne se trouve à l'intérieur de celui-ci.

Avantageusement, on prévoit de plus des entretoises disposées à la périphérie desdits plateaux, entre lesdites armatures externes, et rendues solidaires desdits plateaux.

Dans le cas particulier où le moyeu conforme à la présente invention est destiné à une tête de rotor à trois pales, il est avantageux que lesdits plateaux présentent chacun la forme générale d'un triangle à pointes coupées et que chacune desdites armatures externes se trouve au voisinage d'une pointe coupée, tandis que lesdites entretoises sont disposées le long des côtés desdits triangles.

Afin de permettre le débattement des butées sphériques vers le bas, ainsi que de disposer d'une partie rigide très résistante pour fixer le moyeu à l'arbre du rotor, il est avantageux que ledit plateau inférieur comporte une partie centrale en forme de cuvette ouverte en direction dudit plateau supérieur et un rebord périphérique sur lequel sont montées lesdites armatures externes desdites butées, et, éventuellement, lesdites entretoises.

Cette partie centrale en forme de cuvette peut être sensiblement tronconique.

De même, pour permettre le débattement vers le haut des armatures internes des butées sphériques tout en évitant de donner audit moyeu une hauteur trop importante, il est avantageux que ledit plateau supérieur soit évidé centralement, en regard dudit plateau inférieur.

Les plateaux supérieur et inférieur peuvent être réalisés en alliage léger ou en matériau composite.

La présente invention concerne également une tête de rotor pour aéronef à voilure tournante, comportant un moyeu conforme à l'invention, tel que mentionné ci-dessus.

Dans une telle tête de moyeu, il est avantageux que chaque levier de pale soit constitué par deux plaques disposées de part et d'autre dudit pied de pale et fixées à ce dernier.

De façon connue, la tête de rotor conforme à l'invention peut comporter des amortisseurs de traînée. Ces derniers peuvent être montés soit entre deux pales consécutives, soit entre chaque pale et ledit moyeu.

Dans le premier cas, il est avantageux que chaque amortisseur de traînée soit monté entre les leviers de pale des deux pales consécutives. Dans le deuxième cas, il est avantageux que lesdites entretoises comportent une patte d'attache pour un tel amortisseur de traînée, de sorte que chacun desdits amortisseurs relie le levier d'une pale à une telle patte d'attache solidaire du moyeu.

La description qui va suivre, accompagnée des dessins annexés, fera bien comprendre comment l'invention peut être réalisée.

La figure 1 est une vue partielle, en coupe axiale, d'un mode de réalisation du moyeu conforme à la présente invention, cette coupe correspondant à la ligne I-I de la figure 2.

La figure 2 est une vue de dessus du moyeu de la figure 1 dans laquelle ledit plateau supérieur est supposé éliminé, cette vue correspondant à une coupe selon la ligne II-II de la figure 1.

La figure 3 est une vue schématique en perspective illustrant l'assemblage dudit moyeu.

La figure 4 illustre, en vue partielle correspondant à la figure 2, une variante de réalisation de la tête de rotor conforme à la présente invention.

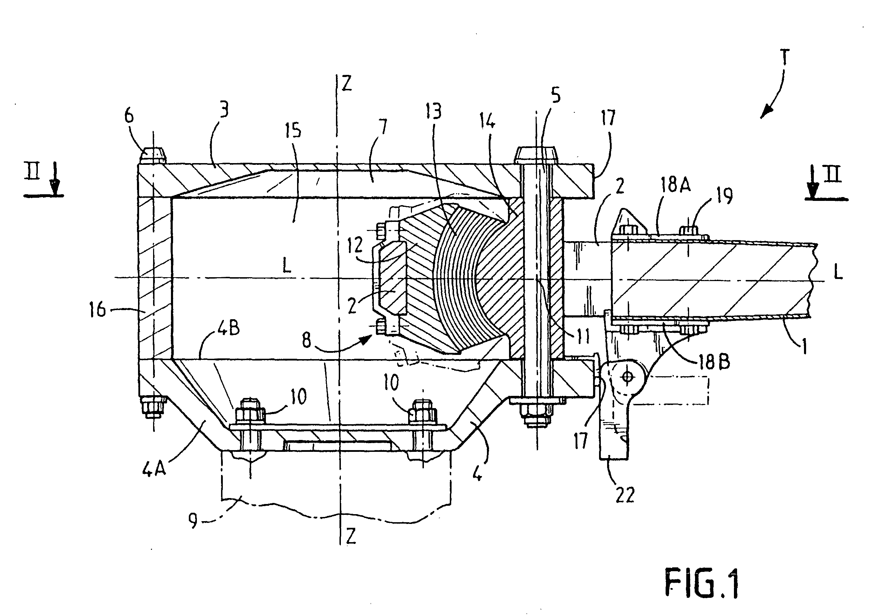

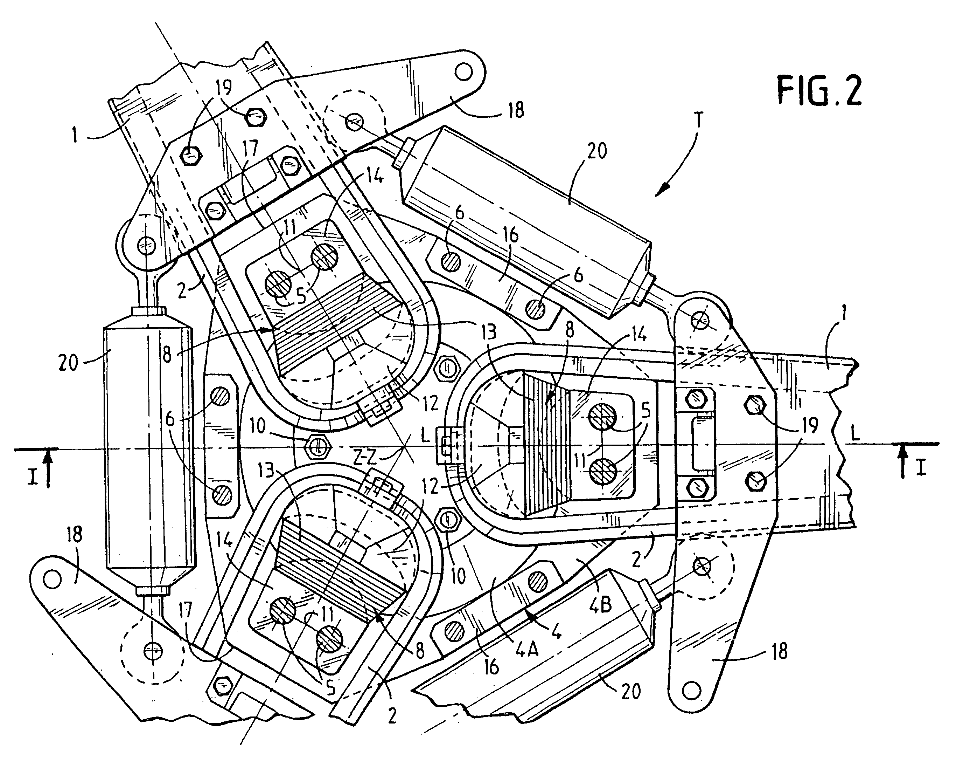

La tête de rotor T pour un aéronef à voilure tournante, représentée sur les figures 1 et 2, comprend trois pales régulièrement réparties autour de l'axe de rotation Z-Z de ladite tête de rotor et seulement représentées par leur pied 1 (sur la figure 1, un seul pied de pale 1 est représenté pour la clarté du dessin). Le pied 1 de chacune desdites pales est pourvu d'une boucle rigide 2 constituant l'attache de la pale correspondante sur le moyeu de ladite tête de rotor et solidaire du longeron de ladite pale.

Ledit moyeu comprend un plateau supérieur 3 et un plateau inférieur 4 formant deux pièces distinctes assemblées l'une à l'autre par l'intermédiaire de boulons 5 ou 6.

Le plateau supérieur 3 comporte un évidement central 7, tandis que le plateau inférieur 4 comporte une partie centrale tronconique 4A en forme de cuvette, ouverte vers le plateau supérieur 3 et faisant saillie vers le bas, ladite cuvette 4A étant entourée par un rebord périphérique plan 4B. La cuvette 4A sert à la fixation de ladite tête de rotor sur son arbre rotatif 9, par l'intermédiaire de boulons 10.

Pour fixer et articuler chaque pale sur le moyeu, on prévoit des butées sphériques lamifiées 8, de type connu, dont le centre de rotation 11 se trouve sur l'axe L-L de la pale correspondante, ces butées sphériques servant d'articulation unique en battement, en traînée et en pas.

Les butées sphériques lamifiées 8 comportent chacune une armature interne 12 dans laquelle la boucle d'attache 2 de la pale correspondante est encastrée de façon connue, un empilement 13 alternatif de coupelles rigides et de lames d'un matériau élastique en forme de portion de sphère et une armature externe 14. Chaque butée sphérique 8 est entourée par la boucle 2 de la pale associée.

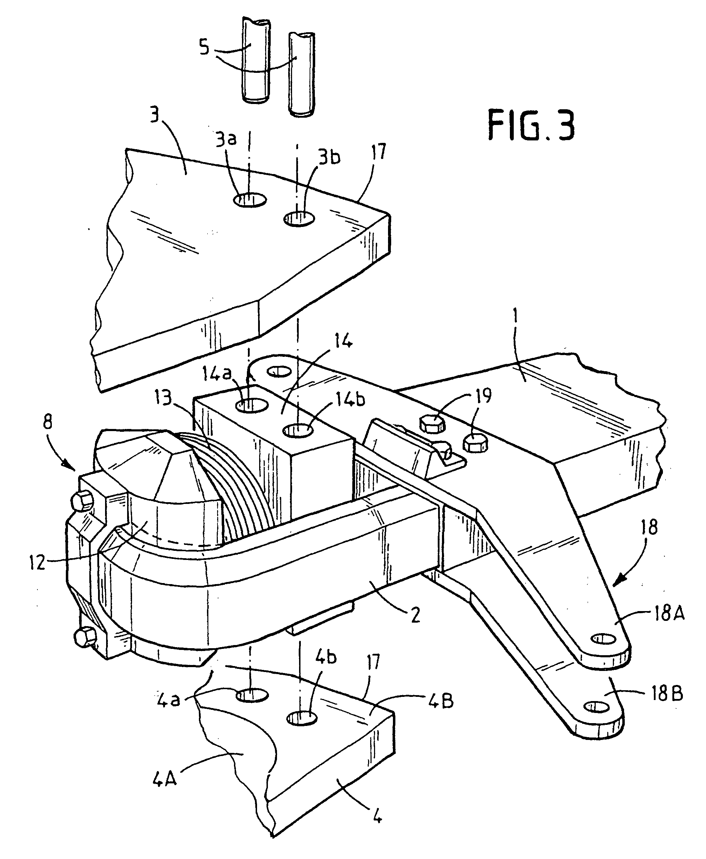

Selon une particularité importante de la présente invention, les armatures externes 14 desdites butées sphériques lamifiées 8 servent d'entretoises aux plateaux supérieur 3 et inférieur 4 qui délimitent entre eux un espace 15 dans lequel sont logées lesdites butées sphériques 8. Les armatures externes 14 de celles-ci sont disposées à la périphérie desdits plateaux 3 et 4 et sont traversées chacune par deux boulons 5. A cet effet, lesdites armatures externes 14 sont percées d'alésages 14a et 14b venant en correspondance, respectivement, de perçages 3a et 3b pratiqués à la périphérie du plateau supérieur 3 et de perçages 4a et 4b pratiqués dans le rebord périphérique plat 4B du plateau inférieur 4. De plus, à la périphérie desdits plateaux, sont disposées des entretoises 16, chacune traversée par deux boulons 6, traversant également le plateau 3 et le rebord périphérique plat 4A du plateau 4 (voir la figure 3).

Ainsi, le moyeu conforme à la présente invention est constitué des plateaux 3 et 4, assemblés l'un à l'autre par boulonnage, avec interposition des armatures externes 14 et des entretoises 16.

Dans l'exemple représenté sur les figures 1 et 2, la tête de rotor comporte trois pales et chacun desdits plateaux 3 et 4 présente la forme générale d'un triangle à pointes coupées 17, chacune des armatures externes 14 se trouvant au voisinage d'une telle pointe coupée. Dans ce cas, les entretoises 16 sont disposées le long des côtés desdits triangles, entre deux armatures externes 14 périphériquement consécutives.

Chaque pied de pale 1 est pourvu d'un levier de pale 18 constitué de deux plaques 18A et 18B disposées de part et d'autre dudit pied de pale 1 correspondant et fixées à ce dernier par des boulons 19. Chaque levier de pale 18 est articulé à une bielle de commande de pas non représentée.

De façon connue, la tête de rotor conforme à la présente invention peut comporter des amortisseurs de traînée 20, de type visco-élastique ou hydraulique.

Sur la figure 2, on a illustré le montage de ces amortisseurs de traînée 20 entre les pales, chaque amortisseur reliant les leviers de pale 18 de deux pales consécutives.

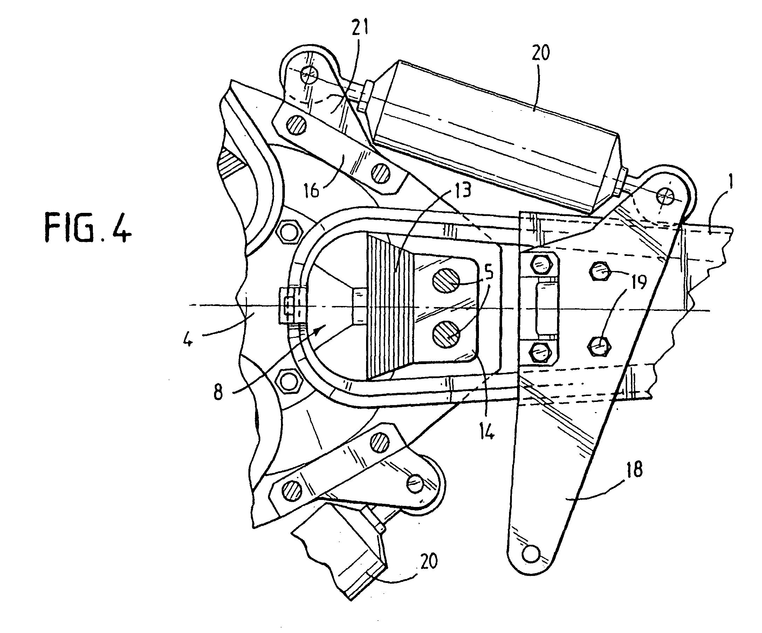

En revanche, sur la figure 4, on a représenté un amortisseur de traînée 20 reliant un levier de pale 18 au moyeu de ladite tête de rotor. Dans ce cas, les butées 16 peuvent comporter une patte d'attache 21, destinée à une extrémité d'un amortisseur de traînée.

Par ailleurs, les leviers de pale 18 peuvent porter des butées centrifuges 22, susceptibles de coopérer avec le chant des pointes coupées 17.

On conçoit aisément de ce qui précède que la moitié du couple d'entraînement du rotor passe du plateau inférieur 4 au plateau supérieur 3 par l'assemblage des deux plateaux au travers des armatures externes 14 des butées sphériques 8 et des entretoises 16. Les efforts de portance et les mouvements dus au battement des pales passent uniquement par le plateau inférieur, tandis que les efforts centrifuges en provenance des pales se répartissent entre les deux plateaux 3 et 4.

On remarquera que, dans la présente invention, la liaison directe de pale à pale par un amortisseur de traînée 20, très proche du moyeu, n'est possible, avec trois pales, que par le fait que le couplage battement-pas (liaison k) de l'invention permet d'éloigner les bielles de commande de pas (non représentées) de manière à dégager l'espace nécessaire aux amortisseurs de traînée 20.

Cette disposition permet d'obtenir une compacité maximale pour le moyeu et par conséquent une masse et une traînée réduite.

Par ailleurs, cette disposition, jointe à la réduction de la distance entre le centre du moyeu et les butées 8, permet de modifier le calage du plateau cyclique non tournant (non représenté) et, avec une inclinaison modérée des bielles de pales, de rendre symétrique l'arrivée des bielles de commandes sur ce plateau par rapport au plan médian de l'aéronef. Cela rend possible l'élimination des renvois de commande sur le plancher mécanique avec des bielles de commande allant directement du combinateur situé en bas de la cloison arrière de la cabine au plateau cyclique.

La combinaison de ces différents moyens permet en conséquence :
- d'avoir un moyeu particulièrement compact et particulièrement léger, grâce au rapprochement des butées du centre moyeu où il n'y a plus d'arbre et au positionnement des amortisseurs très proches du moyeu, surtout dans la variante de réalisation de liaison interpale ;
- de simplifier les commandes (pas de relais de commande sur le plancher mécanique), grâce à la compacité moyeu, au couplage battement-pas et à l'inclinaison des bielles de pas.

Par ailleurs, le couplage battement-pas de l'invention améliore le comportement de l'aéronef du point de vue de la stabilité et du passage en autorotation et l'inclinaison des bielles de pas apporte, grâce au couplage pas-traînée, un amortissement aérodynamique favorable du point de vue de la résonance sol-air.

## Revendications

1. Moyeu pour la tête de rotor d'un aéronef à voilure tournante, comprenant au moins deux pales dont chacune d'elles est reliée radialement audit moyeu par un pied de pale (1) pourvu d'une boucle rigide (2) constituant l'attache de la pale sur ledit moyeu, ledit moyeu portant des butées sphériques lamifiées (8), dont chacune d'elles est associée à une pale et comprend, entre une armature externe (14) rigidement liée audit moyeu et une armature interne (12) liée au pied de ladite pale, un empilement (13) alterné de coupelles rigides et de lames d'un matériau élastique en forme de portions de sphère ayant un centre commun (11), chaque butée sphérique lamifiée (8) constituant pour la pale associée un organe de retenue sur ledit moyeu et une articulation unique en battement, en traînée et en pas et ladite boucle rigide (2) d'une pale entourant la butée sphérique lamifiée associée (8) et étant solidarisée de l'armature interne (12) de cette dernière butée,
**caractérisé en ce qu'**il comprend un plateau supérieur (3) et un plateau inférieur (4) formant deux pièces distinctes assemblées l'une à l'autre avec interposition des armatures externes (14) desdites butées sphériques (8), de sorte que lesdits plateaux (3, 4) sont espacés l'un de l'autre et délimitent entre eux un espace (15) dans lequel sont logées lesdites butées sphériques (8), lesdites armatures externes (14) étant disposées à la périphérie desdits plateaux (3, 4) et étant traversées par des moyens de fixation (5) solidarisant entre eux lesdits plateaux (3, 4) et lesdites butées sphériques (8).

2. Moyeu selon la revendication 1,
**caractérisé en ce qu'**il comporte des entretoises (16) disposées à la périphérie desdits plateaux (3, 4), entre lesdites armatures externes (14), et rendues solidaires desdits plateaux.

3. Moyeu selon la revendication 2, destinée à une tête de rotor à trois pales,
**caractérisé en ce que** lesdits plateaux (3, 4) présentent chacun la forme générale d'un triangle à pointes coupées (17) et **en ce que** chacune desdites armatures externes (14) se trouve au voisinage d'une pointe coupée (17), tandis que lesdites entretoises (16) sont disposées le long des côtés desdits triangles.

4. Moyeu selon l'une quelconque des revendications 1 à 3,
**caractérisé en ce que** ledit plateau inférieur (4) comporte une partie centrale (4A) en forme de cuvette ouverte en direction dudit plateau supérieur (3) et un rebord périphérique (4B) sur lequel sont montées lesdites armatures externes (14) desdites butées (8).

5. Moyeu selon les revendications 2 et 4,
**caractérisé en ce que** lesdites entretoises (16) sont montées sur ledit rebord périphérique (4B) du plateau inférieur (4).

6. Moyeu selon l'une quelconque des revendications 1 à 5,
**caractérisé en ce que** ledit plateau supérieur (3) est évidé centralement, en regard dudit plateau inférieur (4).

7. Moyeu selon l'une quelconque des revendications 1 à 6,
**caractérisé en ce que** lesdits plateaux (3, 4) sont réalisés en alliage léger.

8. Moyeu selon l'une quelconque des revendications 1 à 6,
**caractérisé en ce que** lesdits plateaux (3, 4) sont réalisés en matériau composite.

9. Tête de rotor pour aéronef à voilure tournante comportant :
- un moyeu ;
- au moins deux pales, dont chacune est reliée radialement audit moyeu par un pied de pale (1) qui est pourvu d'une boucle rigide (2) constituant l'attache de la pale sur ledit moyeu ;
- des butées sphériques lamifiées (8), dont chacune d'elles est associée à une pale et comprend, entre une armature externe (14) rigidement liée audit moyeu et une armature interne (12) liée au pied de ladite pale, un empilement (13) alterné de coupelles rigides et de lames d'un matériau élastique en forme de portions de sphère ayant un centre commun (11), chaque butée sphérique lamifiée (8) constituant pour la pale associée un organe de retenue sur ledit moyeu et une articulation unique en battement, en traînée et en pas et ladite boucle rigide (2) d'une pale entourant la butée sphérique lamifiée associée (8) et étant solidarisée de l'armature interne (12) de cette dernière butée,
**caractérisée en ce que** ledit moyeu comprend un plateau supérieur (3) et un plateau inférieur (4) formant deux pièces distinctes assemblées l'une à l'autre avec interposition des armatures externes (14) desdites butées sphériques (8), de sorte que lesdits plateaux sont espacés l'un de l'autre et délimitent entre eux un espace (15) dans lequel sont logées lesdites butées sphériques (8), lesdites armatures externes (14) étant disposées à la périphérie desdits plateaux et étant traversées par des moyens de fixation (5) solidarisant entre eux lesdits plateaux et lesdites butées sphériques.

10. Tête de rotor selon la revendication 9,
**caractérisée en ce que** ledit moyeu présente les particularités spécifiées sous l'une quelconque des revendications 2 à 8.

11. Tête de rotor selon l'une des revendications 9 ou 10,
**caractérisée en ce que** chaque levier de pale (18) est constitué par deux plaques (18A, 18B) disposées de part et d'autre dudit pied de pale (1) et fixées à ce dernier.

12. Tête de rotor selon la revendication 11, comportant des amortisseurs de traînée,
**caractérisée en ce que** chaque amortisseur de traînée (20) est disposé entre les leviers de pale (18) de deux pales consécutives.

13. Tête de rotor selon la revendication 11, comportant des amortisseurs de traînée,
**caractérisée en ce que** chaque amortisseur de traînée (20) est disposé entre un levier de pale (18) d'une pale et ledit moyeu.

14. Tête de rotor selon la revendication 13, pourvue d'un moyeu conforme à la revendication 2 comportant des entretoises (16) disposées à la périphérie desdits plateaux (3, 4) et rendues solidaires desdits plateaux,
**caractérisée en ce que** lesdites entretoises (16) comportent une patte d'attache (21) pour attacher un amortisseur de traînée (20) sur le moyeu.

## Patentansprüche

1. Rotorkopfnabe eines Luftfahrzeuges mit Hubschraube, umfassend mindestens zwei Blätter, von denen jedes radial mit der Nabe durch einen Blattfuß (1 verbunden ist, der mit einer starren Schlaufe (2) versehen ist, die das Verbindungsstück des Blattes mit der Nabe darstellt, wobei die Nabe lamellierte kugelförmige Anschläge (8) trägt, von denen jeder einem Blatt zugeordnet ist und zwischen einem starr mit der Nabe verbundenen äußeren Rahmen (14) und einem mit dem Blattfuß verbundenen inneren Rahmen (12) einen Stapel (13) aus abwechselnd starren Schalen und Blättern aus einem elastischen Material in Form von Kugelstücken mit einem gemeinsamen Mittelpunkt (11) umfasst, wobei jeder lamellierte kugelförmige Anschlag (8) für das zugehörige Blatt ein Teil zum Rückhalten an der Nabe und ein einziges Schlag-, Schwenk- und Blattverstellgelenk bildet, und die starre Schlaufe (2) eines Blattes den zugehörigen lamellierten kugelförmigen Anschlag (8) umgibt und mit dem inneren Rahmen (12) dieses letztgenannten Anschlags, fest verbunden ist,
**dadurch gekennzeichnet, dass** sie eine obere Platte (3) und eine untere Platte (4) umfasst, die zwei unterschiedliche Teile bilden, die unter Zwischenstellung der äußeren Rahmen (14) der kugelförmigen Anschläge (8) miteinander verbunden sind, so dass die Platten (3, 4) voneinander beabstandet sind und zwischen sich einen Raum (15) begrenzen, in dem die kugelförmigen Anschläge (8) untergebracht sind, wobei die äußeren Rahmen (14) an der Peripherie der Platten (3, 4) angeordnet sind und von Befestigungsmitteln (5) durchquert werden, welche die Platten (3, 4) und die kugelförmigen Anschläge (8) untereinander fest verbinden.

2. Nabe nach Anspruch 1, **dadurch gekennzeichnet, dass** sie Stege (16) umfasst, die an der Peripherie der Platten (3, 4) zwischen den äußeren Rahmen (14) angeordnet sind und mit den Platten fest verbunden sind.

3. Nabe nach Anspruch 2, bestimmt für einen Rotorkopf mit drei Blättern, **dadurch gekennzeichnet, dass** die Platten (3, 4) jeweils die allgemeine Form eines Dreiecks mit abgeschnittenen Spitzen (17) aufweisen und dass sich jeder der äußeren Rahmen (14) in der Nähe, einer abgeschnittenen Spitze (17) befindet, während die Stege (16) entlang der Seiten der Dreiecke angeordnet sind.

4. Nabe nach einem der Ansprüche 1 bis 3, **dadurch gekennzeichnet, dass** die untere Platte (4) ein Mittelteil (4A) in Form einer Schale, die in Richtung der oberen Platte (3) offen ist, und einen peripheren Rand (4B), an dem die äußeren Rahmen (14) der Anschläge (8) montiert sind, aufweist.

5. Nabe nach Anspruch 2 und 4, **dadurch gekennzeichnet, dass** die Stege (16) an dem peripheren Rand (4B) der unteren Platte (4) montiert sind.

6. Nabe nach einem der Ansprüche 1 bis 5, **dadurch gekennzeichnet, dass** die obere Platte (3) mittig, gegenüber von der unteren Platte (4), ausgespart ist.

7. Nabe nach einem der Ansprüche 1 bis 6, **dadurch gekennzeichnet, dass** die Platten (3, 4) aus einer Leichtmetall-Legierung gebildet sind.

8. Nabe nach einem der Ansprüche 1 bis 6, **dadurch gekennzeichnet, dass** die Platten (3, 4) aus einem Verbundwerkstoff gebildet sind.

9. Rotorkopf für ein Luftfahrzeug mit Hubschraube. umfassend:
- eine Nabe;
- mindestens zwei Blätter, von denen jedes radial mit der Nabe durch einen Blattfuß (1) verbunden ist, der mit einer starren Schlaufe (2) versehen ist, die das verbindungsstück des Blattes mit der Nabe darstellt;
- lamellierte kugelförmige Anschläge (8), von denen jeder einem Blatt zugeordnet ist und zwischen einem starr mit der Nabe verbundenen äußeren Rahmen (14) und einem mit dem Blattfuß verbundenen inneren Rahmen (12) einen Stapel (13) aus abwechselnd starren Schalen und Blättern aus einem elastischen Material in Form von Kugelstücken mit einem gemeinsamen Mittelpunkt (11) umfasst, wobei jeder lamellierte kugelförmige Anschlag (8) für das zugehörige Blatt ein Teil zum Rückhalten an der Nabe und ein einziges Schlag-, Schwenk- und Blattverstellgelenk bildet, und wobei die starre Schlaufe (2) eines Blattes den zugehörigen lamellierten kugelförmigen Anschlag (8) umgibt und mit dem inneren Rahmen (12) dieses letztgenannten Anschlags fest verbunden ist,
**dadurch gekennzeichnet, dass** die Nabe eine obere Platte (3) und eine untere Platte (4) umfasst, die zwei unterschiedliche Teile bilden, die unter Zwischenstellung der äußeren Rahmen (14) der kugelförmigen Anschläge (8) miteinander verbunden sind, so dass die Platten voneinander beabstandet sind und zwischen sich einen Raum (15) begrenzen, in dem die kugelförmigen Anschläge (8) untergebracht sind, wobei die äußeren Rahmen (14) an der Peripherie der Platten angeordnet sind und von Befestigungsmitteln (5) durchquert werden, welche die Platten und die kugelförmigen Anschläge untereinander fest verbinden.

10. Rotorkopf nach Anspruch 9, **dadurch gekennzeichnet, dass** die Nabe die Besonderheiten aufweist, die in einem der Ansprüche 2 bis 8 spezifiziert sind.

11. Rotorkopf nach einem der Ansprüche 9 oder 10, **dadurch gekennzeichnet, dass** jedes Blatthorn (18) durch zwei Platten (18A, 18B) gebildet wird, die zu beiden Seiten des Blattfußes (1) angeordnet sind und an dem Letztgenannten befestigt sind.

12. Rotorkopf nach Anspruch 11, umfassend Schwenkdämpfer, **dadurch gekennzeichnet, dass** jeder Schwenkdämpfer (20) zwischen den Blatthörnern (18) von zwei aufeinanderfolgenden Blättern angeordnet ist.

13. Rotorkopf nach Anspruch 11, umfassend Schwenkdämpfer, **dadurch gekennzeichnet, dass** jeder Schwenkdämpfer (20) zwischen einem Blatthorn (18) eines Blattes und der Nabe angeordnet ist.

14. Rotorkopf nach Anspruch 13, versehen mit einer Nabe nach Anspruch 2 mit Stegen (16), die an der Peripherie der Platten (3, 4) angeordnet sind und mit den Platten fest verbunden sind, **dadurch gekennzeichnet, dass** die Stege (16) eine Verbindungsklaue (21) umfassen, um einen Schwenkdämpfer (20) an der Nabe zu befestigen.

## Claims

1. Hub for the rotor head of a rotary-wing aircraft, comprising at least two blades each of which is linked radially to said hub by a blade root (1) provided with a rigid loop (2) constituting the attachment of the blade onto said hub, said hub carrying laminated spherical stops (8), each of which is associated with one blade and comprises, between an outer armature (14) rigidly linked to said hub and an inner armature (12) linked to the root of said blade, an alternating stack (13) of rigid cups and layers of an elastic material in the form of spherical portions having a common center (11), each laminated spherical stop (8), for the associated blade, constituting an element for retaining on said hub and a single articulation in flapping, drag and pitch, and said rigid loop (2) of a blade surrounding the associated laminated spherical stop (8) and being integral with the inner armature (12) of this latter stop,
**characterized in that** it comprises an upper plate (3) and a lower plate (4) forming two separate components assembled to one another with the outer armatures (14) of said spherical stops (8) being interposed, in such a way that said plates (3, 4) are spaced from one another and define between them a space (15) in which said spherical stops (8) are housed, said outer armatures (14) being arranged at the periphery of said plates (3, 4) and being traversed by fixing means (5) integrating together said plates (3, 4) and said spherical stops (8).

2. Hub according to Claim 1,
**characterized in that** it includes spacers (16) arranged at the periphery of said plates (3, 4), between said outer armatures (14), and made integral with said plates.

3. Hub according to Claim 2, intended for a 3-blade rotor head,
**characterized in that** said plates (3, 4) each exhibit the general shape of a triangle with cut-off corners (17), and **in that** each of said outer armatures (14) is located in the vicinity of a cut corner (17), while said spacers (16) are arranged along the sides of said triangles.

4. Hub according to any one of Claims 1 to 3,
**characterized in that** said lower plate (4) includes a bowl-shaped central part (4A) open toward said upper plate (3), and a peripheral rim (4B) on which said outer armatures (14) of said stops (8) are mounted.

5. Hub according to Claims 2 and 4,
**characterized in that** said spacers (16) are mounted on said peripheral rim (4B) of the lower plate (4).

6. Hub according to any one of Claims 1 to 5,
**characterized in that** said upper plate (3) is hollowed-out centrally, opposite said lower plate (4).

7. Hub according to any one of Claims 1 1 to 6,
**characterized in that** said plates (3, 4) are produced from light alloy.

8. Hub according to any one of Claims 1 to 6,
**characterized in that** said plates (3, 4) are produced from composite material.

9. Rotor head for a rotary-wing aircraft, including:
- a hub ;
- at least two blades, each of which is linked radially to said hub by a blade root (1) which is provided with a rigid loop (2) constituting the attachment of the blade onto said hub;
- laminated spherical stops (8), each of which is associated with one blade and comprises, between an outer armature (14) rigidly linked to said hub and an inner armature (12) linked to the root of said blade, an alternating stack (13) of rigid cups and layers of an elastic material in the form of spherical portions having a common center (11), each laminated spherical stop (8), for the associated blade, constituting an element for retaining on said hub and a single articulation in flapping, drag and pitch, and said rigid loop (2) of a blade surrounding the associated laminated spherical stop (8) and being integral with the inner armature (12) of this latter stop,
**characterized in that** said hub comprises an upper plate (3) and a lower plate (4) forming two separate components assembled to one another with the outer armatures (14) of said spherical stops (8) being interposed, in such a way that said plates are spaced from one another and define between them a space (15) in which said spherical stops (8) are housed, said outer armatures (14) being arranged at the periphery of said plates and being traversed by fixing means (5) integrating together said plates and said spherical stops.

10. Rotor head according to Claim 9,
**characterized in that** said hub exhibits the features specified under any one of Claims 2 to 8.

11. Rotor head according to either of Claims 9 and 10, **characterized in that** each blade lever (18) consists of two plates (18A, 18B) arranged on either side of said blade root (1) and fixed thereto.

12. Rotor head according to Claim 11, including drag dampers,
**characterized in that** each drag damper (20) is arranged between the blade levers (18) of two consecutive blades.

13. Rotor head according to Claim 11, including drag dampers,
**characterized in that** each drag damper (20) is arranged between a blade lever (18) of one blade and said hub.

14. Rotor head according to Claim 13, provided with a hub in accordance with Claim 2 including spacers (16) arranged at the periphery of said plates (3, 4) and made integral with said plates,
**characterized in that** said spacers (16) include an attaching lug (21) for attaching a drag damper (20) onto the hub.
